# EUROPÄISCHE PATENTSCHRIFT

(11) **EP 2 447 013 B1**
(45) Veröffentlichungstag und Bekanntmachung des Hinweises auf die Patenterteilung: **19.06.2013**
(21) Anmeldenummer: 10013991.4
(22) Anmeldetag: 26.10.2010
(51) Int. Cl.: B25J 9/00, B25J 9/16

(54) **Verfahren und Vorrichtung zur Bearbeitung von robotergeführten Bauteilen**
Method and device for machining robot-guided components
Procédé et dispositif destinés au traitement de composants commandés par robot

(43) Veröffentlichungstag der Anmeldung: 02.05.2012
(73) Patentinhaber: MTU Aero Engines GmbH, 80995 München (DE); INSYS Industriesysteme AG, 3110 Münsingen (CH)
(72) Erfinder: Windprechtinger, Jörg, 81373 München (DE); Hodel, Daniel, 3503 Gysenstein BE (CH)
(74) Vertreter: Schlotter, Alexander Carolus Paul

(56) Entgegenhaltungen:
- EP-A1- 2 014 413
- JP-A- 2002 301 659
- US-A- 5 193 314

## Beschreibung

Die Erfindung betrifft ein Verfahren und eine Vorrichtung zur Bearbeitung von robotergeführten Bauteilen, insbesondere Turbinenschaufeln.

Aus der EP 2 014 413 A1 ist ein Verfahren nach dem Oberbegriff des Anspruchs 1 bekannt. Dabei führt ein Roboter einzelne Kompressorschaufeln an einer oder mehreren Schleifmaschinen, um eine optimierte Eintrittskantenkontur wiederherzustellen. Ein Sensor an einer Schleifscheibe erfasst einen Anpressdruck, den die robotergeführte Schaufel auf diese ausübt. Dieser Kraft-Messwert kann im Bewegungsablauf des Roboters berücksichtigt werden, um Toleranzen des Bauteils auszugleichen. Die EP 2 014 413 A1 verhält sich nicht weiter dazu, wie der Messwert im Bewegungsablauf berücksichtigt wird.

Aufgabe der vorliegenden Erfindung ist es, die Bearbeitung von robotergeführten Bauteilen zu verbessern.

Diese Aufgabe wird durch ein Verfahren mit den Merkmalen des Anspruchs 1 gelöst. Anspruch 11 stellt eine zur Durchführung des Verfahrens eingerichtete Vorrichtung unter Schutz. Vorteilhafte Weiterbildungen sind Gegenstand der Unteransprüche.

Die vorliegende Erfindung kann insbesondere zur Bearbeitung von Turbinenschaufeln, beispielsweise Leit- oder Laufschaufeln von Kompressor(stuf)en oder Turbinen(stufen), von Flugtriebwerken, verwendet werden, wobei vorzugsweise mehrere miteinander verbundene Schaufeln, beispielsweise integral beschaufelte Laufräder (Blisk), ein komplettes Leit- oder Laufgitter oder ein Teil eines solchen Gitters gemeinsam von einem Roboter gehandhabt werden kann. Die Bearbeitung kann insbesondere im Rahmen einer Neuherstellung oder einer Reparatur der Schaufel(n) erfolgen.

Erfindungsgemäß wird ein Bauteil, beispielsweise eine Schaufel, durch wenigstens einen Roboter an wenigstens einem Werkzeug geführt, das dabei das Bauteil bearbeitet. Vorteilhafterweise können Bauteile auch durch denselben oder, insbesondere wahlweise, etwa je nach Bauteil und/oder Werkzeug, verschiedene Roboter, an demselben Werkzeug, wahlweise an, zum Beispiel verschieden ausgebildeten oder einander ersetzenden, Werkzeugen und/oder nacheinander an verschiedenen Werkzeugen geführt werden. Werkzeuge bearbeiten das Bauteil vorzugsweise rotierend und/oder unter Aufprägung einer gewissen Kontaktkraft, etwa spanend, durch Schleifen, Polieren oder dergleichen.

Beispielsweise kann ein Roboter eine Laufschaufel oder Laufschaufelscheibe ("Blisk") aufnehmen und an einer Schleifstation an einer Schleifscheibe führen. Anschließend kann derselbe oder ein anderer Roboter dasselbe Bauteil in einer Polierstation an einer Polierscheibe führen. Währenddessen kann bereits ein weiterer Roboter eine weitere Schaufel(scheibe) an der Schleifscheibe führen, so dass diese optimal genutzt und der Durchsatz erhöht wird. Gleichermaßen können beispielsweise schwerere Schaufel(scheibe)n durch kräftigere Roboter an demselben Werkzeug geführt werden. Es können auch mehrere gleichartige Bearbeitungsstationen vorgesehen sein, um einander, etwa während des Auswechselns einer Schleifscheibe oder dergleichen, zu ersetzen, so dass der bzw. die Roboter besser genutzt werden.

Eines oder mehrere der Werkzeuge sind gelenkig an demselben oder unterschiedlichen, beweglichen oder ortsfesten Werkzeughaltern befestigt. In einer bevorzugten Ausführung weist ein Werkzeug dabei wenigstens einen, insbesondere wenigstens zwei und vorzugsweise drei oder mehr Freiheitsgrade, insbesondere Drehfreiheitsgrade auf, deren Koordinaten zur Erfassung einer Auslenkung des gelenkig befestigten Werkzeugs gegenüber dem Werkzeughalter erfasst werden.

Ein Drehfreiheitsgrad ist vorzugsweise durch ein Drehgelenk mit einer Achse realisiert. Zwei oder mehr Drehfreiheitsgrade können durch ein Drehgelenk mit der entsprechenden Achsenzahl, etwa Kugel- oder Kardangelenke, oder, bevorzugt, durch ein bzw. mehrere Koppelglieder realisiert sein, wobei dann das Werkzeug bzw. eine Werkzeugaufnahme durch ein, vorzugsweise einachsiges, Drehgelenk an einem Koppelglied, zum Beispiel einem Ausleger, und dieses seinerseits durch ein, vorzugsweise wiederum einachsiges, Drehgelenk an dem Werkzeugträger oder einem weiteren Koppelglied befestigt ist, welches dann seinerseits - gegebenenfalls unter Zwischenschaltung weiterer Koppelglieder und Drehgelenke, an dem Werkzeugträger befestigt ist. An Stelle einiger oder aller Drehgelenke können auch translatorische Gelenke, etwa Schienenführungen oder dergleichen, vorgesehen sein. Bevorzugt sind zwei oder mehr Achsen der gelenkigen Befestigung, insbesondere Drehachsen von Drehgelenken, zueinander parallel. Die gelenkige Befestigung des Werkzeugs an dem Werkzeugträger kann eine gelenkig mit dem Werkzeughalter verbundene Werkzeugaufnahme zur, insbesondere lösbaren, Befestigung eines oder verschiedener Werkzeuge, Ausleger, Gelenke, Führungen wie beispielsweise Kulissenführungen und/oder Vorspannelemente, etwa Federn, zur Vorgabe von Soll-Lagen aufweisen.

Erfindungsgemäß wird nun eine Auslenkung des Werkzeugs gegenüber dem Werkzeughalter aus einer Soll-Position infolge einer Führung eines Bauteils an dem Werkzeug erfasst und eine Pose des dieses Bauteil führenden Roboters auf Basis dieser Auslenkung geändert. Insbesondere kann eine Pose des Roboters auf Basis der erfassten Auslenkung des Werkzeugs derart geändert werden, dass diese Auslenkung, vollständig oder wenigstens im Wesentlichen, kompensiert wird, i.e. das Werkzeug sich, wenigstens annähernd, in seiner Soll-Position befindet.

Eine Bearbeitungsposition des Bauteils relativ zum Werkzeug wird durch die Anbindung des Bauteils an den Roboter, die beispielsweise durch einen Greifer realisiert wird, durch die Pose des Roboters, die durch die Stellung seiner Gelenke, etwa der Winkellagen der Drehgelenke eines sechsachsigen Industrieroboters, definiert ist, durch die, vorzugsweise unveränderliche, Position einer Roboterbasis relativ zum Werkzeughalter, und durch die infolge der gelenkigen Befestigung veränderliche Position des Werkzeugs relativ zum Werkzeughalter bestimmt.

Dabei werden eine oder mehrere, nacheinander anzufahrende Bearbeitungspositionen, etwa zur Führung des Bauteils an dem Werkzeug derart, dass dieses auf dem Bauteil eine vorgegebene Bearbeitungsbahn, zum Beispiel ein Schleifmuster, abfährt, für Soll-Werte insbesondere des Bauteils vorgegeben und entsprechende Posen des Roboters abgespeichert, beispielsweise geteacht oder offline programmiert.

Weicht nun ein zu bearbeitendes Bauteil, etwa infolge von Herstellungstoleranzen, und/oder deren Anbindung an den Roboter, zum Beispiel aufgrund von Handhabungstoleranzen beim Greifen mit dem Roboter, von den Soll-Werten ab, die bei der Vorgabe zugrundegelegt wurden, führt dies zu einer Auslenkung des Werkzeugs gegenüber dem Werkzeughalter durch das robotergeführte Bauteil. In der Folge ändert sich die Relativposition zwischen Werkzeug und Bauteil, so dass auch die Bearbeitung in unerwünschter Weise von der Vorgabe abweicht.

Indem erfindungsgemäß diese Auslenkung erfasst und die Pose des Roboters auf Basis dieser Auslenkung geändert wird, kann die Auslenkung kompensiert, insbesondere reduziert oder eliminiert, werden, so dass das Bauteil wieder in der Soll-Position relativ zum Werkzeug und somit von diesem korrekt bearbeitet wird.

In einer bevorzugten Ausführung bewegt ein Roboter ein zu bearbeitendes Bauteil, insbesondere translatorisch, vorzugsweise in einer Ebene senkrecht zu wenigstens einer Drehachse eines Drehgelenkes der gelenkigen Befestigung des Werkzeugs am Werkzeughalter, gegenüber diesem, um die Auslenkung zu kompensieren. Eine solche Translationsbewegung vermeidet vorteilhaft Orientierungsänderungen des Bauteils gegenüber dem Werkzeug

Vorzugsweise wird das Werkzeug gegen ein zu bearbeitendes Bauteil vorgespannt. Dies kann einerseits ein Nachgeben des Werkzeugs unter Erhöhung dieser Vorspannung bewirken, um eine Beschädigung eines Bauteils in einer von der Soll-Position abweichenden Ist-Position zu vermeiden. Zusätzlich kann es vorteilhafterweise bei von der Soll-Position in verschiedenen, insbesondere entgegengesetzten, Richtungen abweichenden Ist-Positionen jeweils zu einer Auslenkung führen, die erfindungsgemäß durch eine entsprechende Posenänderung des Roboters kompensiert werden kann.

Eine solche Vorspannung kann beispielsweise durch Gravitation, etwa durch eine gelenkige Aufhängung derart, dass das Werkzeug in der Soll-Position gegen die Schwerkraft gelenkig angehoben ist, und/oder elastisch, zum Beispiel durch eine oder mehrere Federn, realisiert sein, die in einem oder mehreren, vorzugsweise allen, Freiheitsgraden der gelenkigen Befestigung des Werkzeugs am Werkzeughalter wirken. Zusätzlich oder alternativ kann ein zu bearbeitendes Bauteil aktiv bzw. geregelt vorgespannt werden, insbesondere, indem eine oder mehrere Kräfte und/oder Momente, die zwischen dem Bauteil und dem Werkzeug und/oder zwischen dem Werkzeug und dem Werkzeughalter wirken, erfasst und entsprechend angesteuerte Aktuatoren, beispielsweise Elektromotoren, so angesteuert werden, dass diese erfassten Ist-Kräfte bzw. -Momente sich vorgegebenen Kraft- bzw. Momentenwerten annähren oder diese erreichen, die beispielsweise zur kraftschlüssigen Bearbeitung des Bauteils vorgegeben sind.

In einer bevorzugten Ausführung wird eine Oberflächenbeschaffenheit, insbesondere eine Oberflächenstruktur, eines zu bearbeitenden Bauteils, insbesondere mittels eines optischen Erfassungsmittels, welches vorzugsweise eine Bildverarbeitung aufweisen kann, erfasst. Auf Basis dieser erfassten Oberflächenbeschaffenheit kann dann ein Bearbeitungsprozess vorgegeben werde. Beispielsweise kann eine geeignete Bearbeitungsbahn, ein geeignetes Bearbeitungswerkzeug, etwa eine Schleifkörnung, eine geeignete Bearbeitungszeit, eine geeignete Kontaktkraft zwischen Bauteil und Werkzeug, geeignete, etwa erhabene und/oder raue, Bearbeitungsbereiche und dergleichen vorgegeben werden. Insbesondere kann eine Ist- Oberflächenbeschaffenheit erfasst und mit einer Soll-Oberflächenbeschaffenheit verglichen und entschieden werden, ob überhaupt eine Bearbeitung dieses Bauteils durchgeführt wird, da zum Beispiel da die gewünschte Soll-Oberflächenbeschaffenheit bereits vorliegt oder mit dem Werkzeug nicht erreicht werden kann, und/oder ob eine Bearbeitung des Bauteils, beispielsweise ein Abschleifen, wiederholt wird, da die gewünschte Soll-Oberflächenbeschaffenheit noch nicht erreicht ist.

Weitere Merkmale und Vorteile ergeben sich aus den Unteransprüchen und dem Ausführungsbeispiel. Hierzu zeigt, teilweise schematisiert, die einzige:

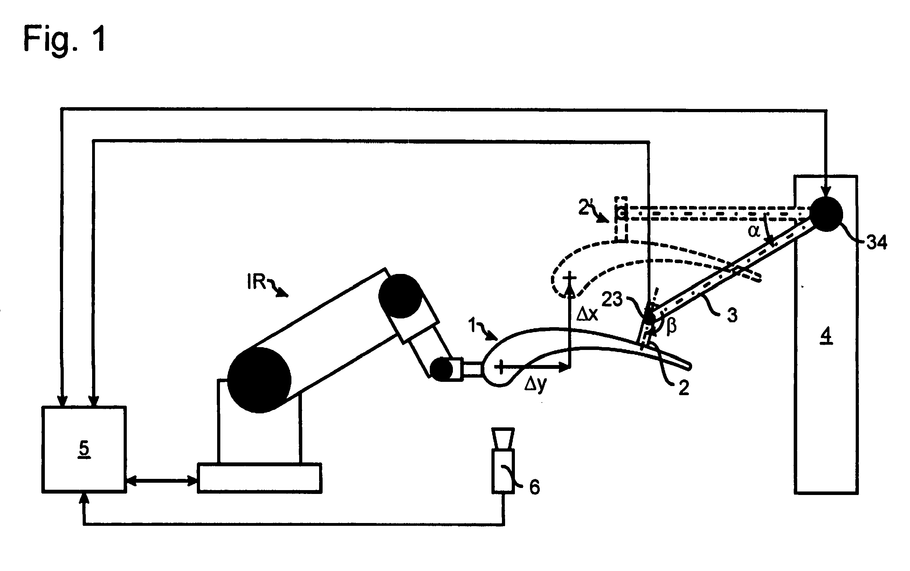

- Fig. 1: die Bearbeitung einer Turbinenschaufel in einer Vorrichtung gemäß einer Ausführung der vorliegenden Erfindung.

Fig. 1 zeigt eine Turbinenschaufel 1, die von einem sechsachsigen Knickarmroboter IR an einem Werkzeug 2 geführt wird.

Dieses ist in einem ersten Drehgelenk 23 an einem Ausleger 3 drehbeweglich befestigt, seine Lage relativ zum Ausleger wird durch den mathematisch negativen Winkel β beschrieben, der die Auslenkung gegenüber einer in Fig. 1 strichliert angedeuteten Soll-Lage angibt. D.h., für β = 0 ist das Werkzeug gegenüber dem Ausleger in der in Fig. 1 strichliert angedeuteten unausgelenkten Lage, in der eine Werkzeugachse senkrecht zum Ausleger 3 ausgerichtet ist.

Der Ausleger 3 ist seinerseits in einem zweiten Drehgelenk 34 an einem inertial festen Werkzeughalter 4 drehbeweglich befestigt, seine Lage relativ zum Werkzeughalter wird durch den mathematisch positiven Winkel α beschrieben, der die Auslenkung gegenüber der in Fig. 1 strichliert angedeuteten Soll-Lage angibt. D.h., für α = 0 ist der Ausleger 3 gegenüber dem Werkzeughalter 4 in der in Fig. 1 strichliert angedeuteten unausgelenkten Lage, in der eine Auslegerachse waagrecht ausgerichtet ist.

Die Drehachsen des ersten und zweiten Drehgelenkes sind zueinander parallel und stehen senkrecht auf der Zeichenebene der Fig. 1. Somit ist das Werkzeug 2, das beispielsweise ein Schleifwerkzeug, insbesondere eine um die strichpunktiert angedeutete Werkzeugachse rotierende Schleifscheibe, sein kann, gelenkig an dem Werkzeughalter 4 befestigt, seine Auslenkung gegenüber dem Werkzeughalter 4 aus der Soll-Position wird durch die Winkel (α, β) beschrieben.

In den Gelenken 23, 34 wirken Elektromotoren, die in Fig. 1 durch ausgefüllte Kreise angedeutet sind. Drehgeber, beispielsweise Resolver oder Inkrementalgeber, erfassen die Winkel (α, β) und übermitteln diese an eine Steuereinrichtung 5. Zusätzlich sind Momentensensoren vorgesehen, die die Drehmomente um die Drehachsen der Gelenke 23, 34 erfassen und ebenfalls an die Steuereinrichtung 5 übermitteln.

Die Steuereinrichtung 5 steuert die Elektromotoren in den Gelenken 23, 34 auf Basis der erfassten Ist-Drehmomente derart an, dass diese sich vorgegebenen Soll-Drehmomenten annähern, indem sie beispielsweise Stellgrößen ausgibt, welche zur Differenz zwischen Soll- und Ist-Drehmoment in dem Drehgelenk, auf welches der Elektromotor wirkt, oder der Differenz zwischen Soll- und Ist-Kraft zwischen Schaufel 1 und Werkzeug 2 proportional sind. Auf diese Weise wird das Werkzeug 2 aktiv bzw. geregelt gegen die Schaufel 1 vorgespannt. Rein exemplarisch kann beispielsweise das Soll-Drehmoment im Drehgelenk 34 dem Produkt aus der Länge des Auslegers 3 einerseits und andererseits der Soll-Prozesskraft, mit der das Schleifwerkzeug beim Schleifen auf die Schaufel 1 gepresst werden soll, abzüglich der Gewichtskraft von Ausleger und Werkzeug entsprechend. Gleichermaßen können auch beispielsweise Federn vorgesehen sein, welche auf die Drehgelenke 23, 34 wirken und, unterstützt durch die Schwerkraft, das Werkzeug 2 passiv gegen die Schaufel 1 vorspannen.

Die Steuereinrichtung 5 steuert den Roboter IR, indem sie die erfassten Ist-Stellungen seiner Gelenke bzw. Motoren mit Soll-Stellungen vergleicht, die vorab geteacht wurden und die Soll-Pose des Roboters IR beschreiben.

Weicht nun, beispielsweise infolge herstellungsbedingter Toleranzen der Schaufel 1 oder einer abweichenden Greifposition des Roboters IR, die Position des Werkzeugs 2 von der Soll-Position 2' ab, so weist das Werkzeug 2, das aufgrund der Kraftregelung in den Elektromotoren der Gelenke 23, 34 trotzdem gegen die Schaufel vorgespannt ist und sich auf dieser abstützt, eine in Fig. 1 ausgezogen dargestellte Auslenkung α, β ≠ 0 gegen die in Fig. 1 strichliert angedeutete Soll-Position auf, die von den Drehgebern in der Gelenken 23, 34 erfasst und an die Steuereinrichtung 5 übertragen wird.

Diese steuert nun den Roboter IR derart, dass er die Schaufel 1 in der Zeichenebene der Fig. 1 in der dort dargestellten x-y-Richtung um Δx, Δy translatorisch verschiebt, bis die Auslenkung - wenigstens näherungsweise - kompensiert ist, d.h. α, β ≈ 0 bzw. α, β = 0. Dabei verschiebt die Steuerung 5 mittels des Roboters IR die Schaufel 1 solange in x-Richtung, bis die Auslenkung α des Werkzeugs 2 gegenüber dem Ausleger 3 kompensiert ist, und parallel oder sequentiell hierzu solange in y-Richtung, bis die Auslenkung β des Auslegers 3 gegenüber dem Werkzeughalter 4 kompensiert ist, ohne die Orientierung der Schaufel 1 zu verändern.

Auf diese Weise kann die Schaufel 1 durch das Schleifwerkzeug 2 in der gewünschten Soll-Position 2' mit dem vorgegebenen Anstellwinkel und Anpressdruck des Werkzeugs bearbeitet werden.

In Fig. 1 ist zudem ein optisches Erfassungsmittel in Form einer Kamera 6 mit Bildverarbeitung dargestellt, die Informationen an die Steuereinrichtung 5 übermittelt. Diese legt auf Basis der Auswertung der durch die Kamera 6 erfassten Oberflächenbeschaffenheit der Schaufel 1 eine individuell angepasste Bearbeitung fest. Beispielsweise können so zu bearbeitende Bereiche der Schaufel 1 festgelegt und/oder das Bearbeitungsergebnis überprüft und gegebenenfalls eine Nachbearbeitung durch nochmaliges Bearbeiten mit demselben oder einem anderen Werkzeug eingeleitet werden.

### Bezugszeichenliste

| | |
|---|---|
| 1 | Turbinenschaufel (Bauteil) |
| 2(') | Werkzeug (unausgelenkte Soll-Position) |
| 3 | Ausleger (gelenkige Befestigung) |
| 4 | Werkzeughalter |
| 5 | Steuereinrichtung |
| 6 | Kamera |
| 23 | Drehgelenk zwischen 2 und 3 (gelenkige Befestigung) |
| 34 | Drehgelenk zwischen 3 und 4 (gelenkige Befestigung) |
| | |
| IR | Roboter |
| α, β | Auslenkung |

## Patentansprüche

1. Verfahren zur Bearbeitung von robotergeführten Bauteilen, insbesondere Turbinenschaufeln (1), mit einem Werkzeug (2), welches gelenkig (3, 23, 34) an einem Werkzeughalter (4) befestigt ist, **dadurch gekennzeichnet, dass** eine Auslenkung (α, β) des Werkzeugs (2) gegenüber dem Werkzeughalter (4) aus einer Soll-Position (2') erfasst und eine Pose eines ein Bauteil führenden Roboters (IR) auf Basis dieser Auslenkung geändert wird.

2. Verfahren nach Anspruch 1, **dadurch gekennzeichnet, dass** das Werkzeug mit wenigstens einem, insbesondere mit wenigstens zwei und vorzugsweise mit wenigstens drei Freiheitsgraden, insbesondere Drehfreiheitsgraden an dem Werkzeughalter befestigt ist, deren Koordinaten (α, β) zur Erfassung der Auslenkung des Werkzeugs erfasst werden.

3. Verfahren nach einem der vorhergehenden Ansprüche, **dadurch gekennzeichnet, dass** eine Pose des Roboters auf Basis der erfassten Auslenkung des Werkzeugs derart geändert wird, dass diese Auslenkung, wenigstens im Wesentlichen, kompensiert wird.

4. Verfahren nach Anspruch 3, **dadurch gekennzeichnet, dass** der Roboter ein zu bearbeitendes Bauteil, insbesondere translatorisch, gegen den Werkzeughalter bewegt (Δx, Δy), um die Auslenkung, wenigstens im Wesentlichen, zu kompensieren.

5. Verfahren nach Anspruch 4, **dadurch gekennzeichnet, dass** der Roboter das zu bearbeitende Bauteil in einer ersten Richtung (Δx) gegen den Werkzeughalter bewegt, um die Auslenkung in einem Freiheitsgrad (β) zu kompensieren, und in einer zweiten Richtung (Δy) gegen den Werkzeughalter bewegt, um die Auslenkung in einem anderen Freiheitsgrad (β) zu kompensieren.

6. Verfahren nach einem der vorhergehenden Ansprüche, **dadurch gekennzeichnet, dass** das Werkzeug (2) gegen ein zu bearbeitendes Bauteil (1) vorgespannt wird.

7. Verfahren nach Anspruch 6, **dadurch gekennzeichnet, dass** das zu bearbeitende Bauteil geregelt, insbesondere kraft- und/oder momentengeregelt, und/oder passiv, insbesondere schwerkraftbeaufschlagt vorgespannt wird.

8. Verfahren nach einem der vorhergehenden Ansprüche, **dadurch gekennzeichnet, dass** ein oder mehrere Roboter das Bauteil wahlweise und/oder nacheinander an verschiedenen Werkzeugen führen.

9. Verfahren nach einem der vorhergehenden Ansprüche, **dadurch gekennzeichnet, dass** ein oder mehrere Bauteile wahlweise und/oder nacheinander von verschiedenen Robotern geführt werden.

10. Verfahren nach einem der vorhergehenden Ansprüche, **dadurch gekennzeichnet, dass** eine Oberflächenbeschaffenheit eines zu bearbeitenden Bauteils, insbesondere optisch, erfasst und auf Basis der erfassten Oberflächenbeschaffenheit ein Bearbeitungsprozess vorgegeben wird.

11. Vorrichtung zur Bearbeitung von Bauteilen, insbesondere Turbinenschaufeln (1), mit einem Werkzeughalter zur gelenkigen Befestigung eines Werkzeuges (2), einem Roboter (IR) und einer Steuereinrichtung (5), **dadurch gekennzeichnet, dass** sie zur Durchführung eines Verfahrens nach einem der vorhergehenden Ansprüche eingerichtet ist.

## Claims

1. Method for machining robot-guided components, in particular turbine blades (1), having a tool (2) which is secured in an articulated manner (3, 23, 34) to a tool-holder (4), **characterised in that** a deflection (α, β) of the tool (2) in relation to the tool-holder (4) out of a desired position (2') is detected, and a pose of a component-guiding robot (IR) is changed on the basis of this deflection.

2. Method according to claim 1, **characterised in that** the tool is secured to the tool-holder with at least one, in particular with at least two, and preferably with at least three, degrees of freedom, in particular degrees of rotational freedom, the coordinates (α, β) of which are detected in order to detect the deflection of the tool.

3. Method according to one of the preceding claims, **characterised in that** a pose of the robot is changed on the basis of the detected deflection of the tool in such a way that this deflection is compensated for, at least substantially.

4. Method according to claim 3, **characterised in that** the robot moves (Δx, Δy) a component that is to be machined, in particular in a translatory manner, towards the tool-holder in order to compensate for the deflection, at least substantially.

5. Method according to claim 4, **characterised in that** the robot moves the component that is to be machined in a first direction (Δx) towards the tool-holder in order to compensate for the deflection in one degree of freedom (β) and in a second direction (Δy) towards the tool-holder in order to compensate for the deflection in a different degree of freedom (β).

6. Method according to one of the preceding claims, **characterised in that** the tool (2) is biased towards a component (1) that is to be machined.

7. Method according to claim 6, **characterised in that** the component that is to be machined is biased in a regulated manner, in particular in a force- and/or torque-regulated manner, and/or passively, in particular with the application of gravitational force.

8. Method according to one of the preceding claims, **characterised in that** one or more robots guides/guide the component selectively and/or one after the other at various tools.

9. Method according to one of the preceding claims, **characterised in that** one or more components is/are guided selectively and/or one after the other by various robots.

10. Method according to one of the preceding claims, **characterised in that** a surface finish of a component that is to be machined is detected, in particular visually, and a machining process is predetermined on the basis of the surface finish that is detected.

11. A device for machining components, in particular turbine blades (1), having a tool-holder for the articulated securement of a tool (2), a robot (IR) and a control device (5), **characterised in that** it is set up in order to carry out a method according to one of the preceding claims.

## Revendications

1. Procédé servant à usiner des composants guidés par robot, en particulier des aubes de turbine (1), à l'aide d'un outil (2) qui est fixé au niveau d'un porte-outil (4) de manière articulée (3, 23, 34), **caractérisé en ce qu'**une déviation (α, β) de l'outil (2) par rapport au porte-outil (4) est détectée à partir d'une position de consigne (2'), et **en ce qu'**une pose d'un robot (IR) guidant un composant est modifiée sur la base de ladite déviation.

2. Procédé selon la revendication 1, **caractérisé en ce que** l'outil est fixé au niveau du porte-outil avec au moins un, en particulier au moins deux et de préférence au moins trois degrés de liberté, en particulier des degrés de liberté de rotation, dont les coordonnées (α, β) sont détectées aux fins de la détection de la déviation de l'outil.

3. Procédé selon l'une quelconque des revendications précédentes, **caractérisé en ce qu'**une pose du robot est modifiée sur la base de la détection de la déviation de l'outil de telle manière que ladite déviation est compensée au moins sensiblement.

4. Procédé selon la revendication 3, **caractérisé en ce que** le robot déplace (Δx, Δy) un composant devant être usiné, en particulier par translation, contre le porte-outil afin de compenser au moins sensiblement la déviation.

5. Procédé selon la revendication 4, **caractérisé en ce que** le robot déplace le composant devant être usiné dans une première direction (Δx) contre le porte-outil afin de compenser la déviation dans un degré de liberté (β), et le déplace dans une deuxième direction (Δy) contre le porte-outils afin de compenser la déviation dans un autre degré de liberté (β).

6. Procédé selon l'une quelconque des revendications précédentes, **caractérisé en ce que** l'outil (2) est précontraint contre un composant (1) devant être usiné.

7. Procédé selon la revendication 6, **caractérisé en ce que** le composant devant être usiné est précontraint de manière réglée, en particulier en mode réglage de force et/ou de couple, et/ou est précontraint de manière passive, en particulier de manière à être soumis à l'effet de la gravité.

8. Procédé selon l'une quelconque des revendications précédentes, **caractérisé en ce qu'**un ou plusieurs robots guident le composant au choix et/ou les uns après les autres au niveau de divers outils.

9. Procédé selon l'une quelconque des revendications précédentes, **caractérisé en ce qu'**un ou plusieurs composants sont guidés au choix et/ou les uns après les autres par divers robots.

10. Procédé selon l'une quelconque des revendications précédentes, **caractérisé en ce qu'**une caractéristique de surface d'un composant devant être usiné, est détectée, en particulier de manière optique, et **en ce qu'**un processus d'usinage est prédéfini sur la base de la caractéristique de surface détectée.

11. Dispositif servant à usiner des composants, en particulier des aubes de turbine (1), comprenant un porte-outil servant à fixer de manière articulée un outil (2), comprenant un robot (IR) et un système de commande (5), **caractérisé en ce que** ledit dispositif est mis en place aux fins de la mise en oeuvre d'un procédé selon l'une quelconque des revendications précédentes.
